(19) Europäisches Patentamt
European Patent Office
Office européen des brevets

(11) **EP 4 339 635 A1**

(12) **EUROPEAN PATENT APPLICATION**

(43) Date of publication:
**20.03.2024 Bulletin 2024/12**

(21) Application number: **23160157.6**

(22) Date of filing: **06.03.2023**

(51) International Patent Classification (IPC):
**G01S 7/41** *(2006.01)*  **G01S 13/86** *(2006.01)*
**G01S 13/87** *(2006.01)*  **G01S 13/88** *(2006.01)*
**G01S 13/90** *(2006.01)*

(52) Cooperative Patent Classification (CPC):
**G01S 13/887; G01S 7/412; G01S 7/417;**
**G01S 13/86; G01S 13/867; G01S 13/87;**
G01S 7/003; G01S 7/356; G01S 13/34;
G01S 13/343

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**KH MA MD TN**

(30) Priority: **14.09.2022 JP 2022145978**

(71) Applicant: **KABUSHIKI KAISHA TOSHIBA**
**Minato-ku**
**Tokyo**
**105-0023 (JP)**

(72) Inventors:
• **Yoda, Daiki**
  **Tokyo, 105-0023 (JP)**
• **Mori, Hiroki**
  **Tokyo, 105-0023 (JP)**
• **Tandai, Tomoya**
  **Tokyo, 105-0023 (JP)**
• **Moriya, Akira**
  **Tokyo, 105-0023 (JP)**
• **Sekiya, Ryota**
  **Tokyo, 105-0023 (JP)**

(74) Representative: **Hoffmann Eitle**
**Patent- und Rechtsanwälte PartmbB**
**Arabellastraße 30**
**81925 München (DE)**

(54) **INSPECTION SYSTEM, INSPECTION METHOD, AND STORAGE MEDIUM**

(57) According to one arrangement, an inspection system includes an estimation device (10) and a detection device (20). The estimation device (10) is configured to estimate an inspection range having a possibility that a predetermined object is present. The detection device (20) is configured to generate detection information as to whether or not the predetermined object is present in the inspection range.

FIG. 3

EP 4 339 635 A1

**Description**

FIELD

The present disclosure relates to an inspection system, an inspection method, and a storage medium for inspecting a possession of a person.

BACKGROUND

An inspection system has been proposed. The inspection system emits an electromagnetic wave to a person, receives the electromagnetic wave reflected by the person, and inspects a possession of the person based on the received signal. The inspection accuracy is proportional to the emission range, the number of times of emission, and the like of the electromagnetic wave. In order to increase the inspection accuracy, the inspection time becomes long. In such an inspection system, it is desired to efficiently inspect possessions of a large number of persons.

BRIEF DESCRIPTION OF THE DRAWINGS

FIG. 1 is a diagram for describing an example of the inspection system according to the first arrangement.
FIG. 2 is a diagram for describing an example of arrangement of an estimation device and a detection device of the inspection system according to the first arrangement.
FIG. 3 is a diagram for describing an example of an inspection system according to the second arrangement.
FIG. 4 is a diagram for describing an example of arrangement of the inspection system according to the second arrangement.
FIG. 5 is a diagram for describing a detailed example of the estimation device according to the second arrangement.
FIG. 6 is a block diagram for describing an example of the first inspection unit and the second inspection unit of the estimation device according to the second arrangement.
FIG. 7A is a diagram for describing an example of a waveform of a chirp signal used in the estimation device according to the second arrangement.
FIG. 7B is a diagram for describing another example of a waveform of the chirp signal used in the estimation device according to the second arrangement.
FIG. 8A is a diagram for describing an example of received signals of the estimation device according to the second arrangement.
FIG. 8B is a diagram for describing an example of intermediate frequency signals of the estimation device according to the second arrangement.
FIG. 8C is a diagram for describing an example of reflection intensities of the estimation device according to the second arrangement.
FIG. 9A is a diagram for describing an example of a reflection intensity distribution obtained by the estimation device according to the second arrangement.
FIG. 9B is a diagram for describing another example of a reflection intensity distribution obtained by the estimation device according to the second arrangement.
FIG. 9C is a diagram for describing a still another example of a reflection intensity distribution obtained by the estimation device according to the second arrangement.
FIG. 10 is a diagram for describing a modification of the estimation device according to the second arrangement.
FIG. 11A is a diagram for describing an example of a mechanical scanning unit of the estimation device according to the second arrangement.
FIG. 11B is a diagram for describing an example of an inspection unit of the estimation device according to the second arrangement.
FIG. 12 is a diagram for describing a detailed example of the detection device according to the second arrangement.
FIG. 13 is a diagram for describing a first operation example of the detection device according to the second arrangement.
FIG. 14 is a diagram for describing an example of an image of the person generated by the detection device according to the second arrangement.
FIG. 15A is a diagram for describing an example of an operation of an antenna selection unit of the detection device according to the second arrangement.
FIG. 15B is a diagram for describing another example of an operation of an antenna selection unit of the detection device according to the second arrangement.

FIG. 16 is a diagram for describing a second operation example of the detection device according to the second arrangement.

FIG. 17 is a diagram for describing a modification of an array antenna according to the second arrangement.

FIG. 18 is a flowchart for describing an example of a flow of basic processing of the inspection system according to the second arrangement.

FIG. 19 is a diagram for describing an example of an inspection system according to a third arrangement.

FIG. 20 is a diagram for illustrating an example of an inspection system according to a fourth arrangement.

DETAILED DESCRIPTION

Various arrangements will be described hereinafter with reference to the accompanying drawings.

The disclosure is merely an example and is not limited by contents described in the arrangements described below. Modification which is easily conceivable by a person of ordinary skill in the art comes within the scope of the disclosure as a matter of course. In order to make the description clearer, the sizes, shapes, and the like of the respective parts may be changed and illustrated schematically in the drawings as compared with those in an accurate representation. Constituent elements corresponding to each other in a plurality of drawings are denoted by like reference numerals and their detailed descriptions may be omitted unless necessary.

According to one arrangement, an inspection system includes an estimation device and a detection device. The estimation device is configured to estimate an inspection range having a possibility that a predetermined object is present. The detection device is configured to generate detection information as to whether or not the predetermined object is present in the inspection range.

First Arrangement

An application example of an inspection system according to a first arrangement is a security system. The security system is installed in a facility where an unspecified large number of people gather, such as an airport, a station, a shopping mall, a concert hall, or an exhibition hall. The security system detects whether or not a person possesses a predetermined object such as a dangerous object that is not permitted to be possessed. Since an inspection target person moves and does not stay in an inspection range for a long time in some cases, it is desired to accurately detect possessions of the inspection target person in a short time. The inspection system of the arrangement inspects by stepwisely narrowing down the inspection target person and the inspection range in two stages of a primary inspection and a secondary inspection.

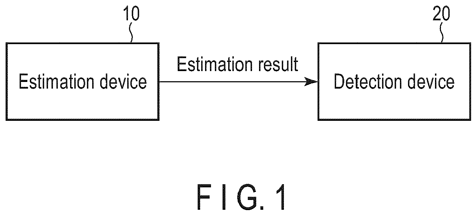

FIG. 1 is a diagram illustrating an example of the inspection system according to the first arrangement. The inspection system includes an estimation device 10 performing the primary inspection and a detection device 20 performing the secondary inspection. The estimation device 10 and the detection device 20 are connected by a wireless LAN or a wired LAN. Examples of the wireless LAN are Wi-Fi (registered trademark) and Bluetooth (registered trademark). A metal cable or an optical fiber may be used as the wired LAN.

The estimation device 10 inspects the entire body of the inspection target person in a primary inspection range in a short time. The estimation device 10 estimates whether or not there is a possibility that the inspection target person possesses the predetermined object. In a case where the estimation device 10 estimates that there is the possibility that the inspection target person possesses the predetermined object, the estimation device 10 estimates the secondary inspection range of the inspection target person in which there is a possibility that the predetermined object is present. The estimation of the secondary inspection range by the estimation device 10 is the primary inspection.

The secondary inspection range estimated by the estimation device 10 is a part of the primary inspection range. The secondary inspection range may be a part of the inspection target person, for example, a right side range, a left side range, an upper side range, or a lower side range. The secondary inspection range may be a body part, for example, a right arm, a left arm, a right foot, a left foot, or a waist.

Examples of the estimation device 10 are a metal detector, an X-ray camera, an infrared camera, and a radar. The estimation device 10 does not need to accurately detect whether or not the inspection target person possesses the predetermined object over time. Accurate detection is performed by the detection device 20.

An inspection target person to be inspected by the estimation device 10 may be referred to as a primary inspection target person. An inspection target person having a possibility of possessing the predetermined object may be referred to as a secondary inspection target person.

The estimation device 10 transmits the estimation result to the detection device 20. The estimation result is range information indicating the secondary inspection range. In a case where the estimation device 10 uses the radar, positional information of the predetermined object is obtained. The range information may be the positional information (numerical information), for example, a part having a height of 130 cm from a floor.

The detection device 20 inspects the secondary inspection target person in the secondary inspection range based on the estimation result transmitted from the estimation device 10. The detection device 20 detects whether or not the predetermined object is present in the secondary inspection range. The detection device 20 displays the detection result on a display device or outputs the detection result as an audio signal from a speaker. When the presence of the predetermined object in the secondary inspection range is detected, an operator of the inspection system executes security measures such as interrogating the inspection target person, performing body touch inspection, and closing a gate to prevent intrusion.

The detection device 20 may adopt the same inspection method as the inspection method of the estimation device 10, or may adopt a different inspection method. Examples of the detection device 20 are a metal detector, an X-ray camera, an infrared camera, and a radar. A synthetic aperture radar (SAR) that generates an image may be used as the radar.

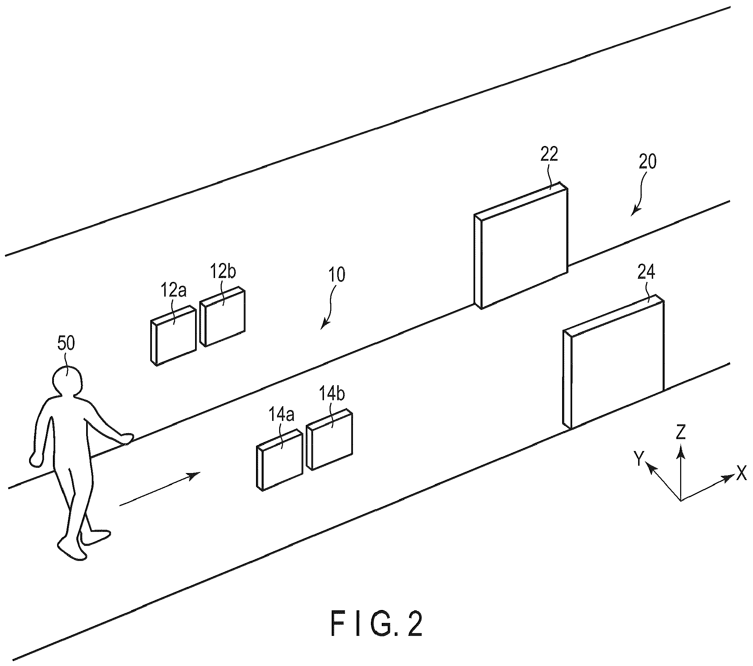

FIG. 2 illustrates an example of arrangement of the estimation device 10 and the detection device 20 of the inspection system according to the first arrangement. FIG. 2 illustrates an example in which a possession of a walking person 50 is inspected. The inspection target person may include a stationary person.

The estimation device 10 and the detection device 20 are installed along a passage where the person 50 walks. The estimation device 10 is arranged on a near side in a traveling direction of the person 50, and the detection device 20 is arranged on a front side in the traveling direction. With such an arrangement, the person 50 first passes through the estimation device 10 and then passes through the detection device 20. A situation in which the person 50 who has passed through the estimation device 10 does not pass through the detection device 20 do not occur. A situation in which the person 50 first passes through the detection device 20 and then passes through the estimation device 10 do not occur.

A longitudinal direction of the passage is referred to as an X direction. A width direction of the passage is referred to as a Y direction. A height direction of the person is referred to as a Z direction.

The estimation device 10 includes estimation units 12a, 12b, 14a, and 14b. The estimation units 12a and 12b are installed at a left side of the passage. The estimation units 14a and 14b are installed at a right side of the passage. The number of estimation units 12 and 14 is not limited to the illustrated example. The estimation device 10 can inspect the entire body of the person 50 in the primary inspection range by the estimation units 12a, 12b, 14a, and 14b. Each of the estimation units 12a, 12b, 14a, and 14b is a metal detector, an X-ray camera, an infrared camera, or a radar.

The detection device 20 includes detection units 22 and 24. The detection unit 22 is installed at the left side of the passage. The detection unit 24 is installed at the right side of the passage.

The secondary inspection range of the detection units 22 and 24 may be the entire body range or a partial body range of the person 50. In a case where the secondary inspection range is a partial body range of the person 50, the detection units 22 and 24 may be movable. The positions of the detection units 22 and 24 may be changed in accordance with the range information transmitted from the estimation device 10. By changing the positions of the detection units 22 and 24, the inspection position is changed. For example, in a case where the range information indicates the upper range, the detection units 22 and 24 are moved upward to inspect the upper range of the person 50. Each of the detection units 22 and 24 is a metal detector, an X-ray camera, an infrared camera, or a radar.

According to the inspection system of the first arrangement, the detection device 20 can adjust a size and a position of the secondary inspection range in accordance with the estimation result of the estimation device 10. Therefore, the detection device 20 can inspect the secondary inspection target persons in the secondary inspection range. Since the secondary inspection range of the detection device 20 is narrower than the primary inspection range of the estimation device 10, an inspection time can be shortened as compared with a case where the entire body of the secondary inspection target person is inspected again by the detection device 20. Thus, the detection device 20 can intensively repeatedly inspect the secondary inspection target person many times in the secondary inspection range. Therefore, the detection device 20 can detect more detailed information of the possession (shape, size, material, position, and the like of the object).

The inspection target person of the detection device 20 is limited to the secondary inspection target person estimated by the estimation device 10. Aa time required for the entire two-stage inspection is shorter than that in a case where the detection device 20 inspects the primary inspection target person in detail.

If the primary inspection range is the entire body of the inspection target person and the secondary inspection range is also the entire body of the inspection target person, it is necessary to widen the inspection range of the detection device 20. The device cost is proportional to the inspection range. When the secondary inspection range is a part of the primary inspection range, the detection device 20 may inspect a narrow secondary inspection range. Thus, the cost of the detection device 20 can be suppressed.

When the secondary inspection range is the same as the primary inspection range and the detection device 20 can inspect the entire body of the inspection target person at least once, the detection device 20 can detect the inspection target person or the predetermined object missed by the estimation device 10. Therefore, the detection accuracy can be improved.

The estimation result may include material information of the predetermined object. For example, the estimation result may include information indicating that there is a possibility that metal is present in the secondary inspection range. In a case where the estimation device 10 includes the metal detector, the estimation device 10 can easily detect metal. Even in a case where the estimation device 10 includes an infrared camera, an X-ray camera, and a radar, the estimation device 10 can detect metal. The detection device 20 using the synthetic aperture radar performs image processing in which a threshold is set to detect an object whose material is X and size is Y or more from an image. Therefore, the detection device 20 can accurately detect the presence or absence of the predetermined object whose material is X and size is Y or more. When the detection device 20 uses the synthetic aperture radar the operator may detect the presence or absence of the predetermined object by visually observing the image instead of the automatic determination by the image processing based on the threshold. If the detection device 20 informs the operator of the material information, the operator can easily find the predetermined object on a screen.

Second Arrangement

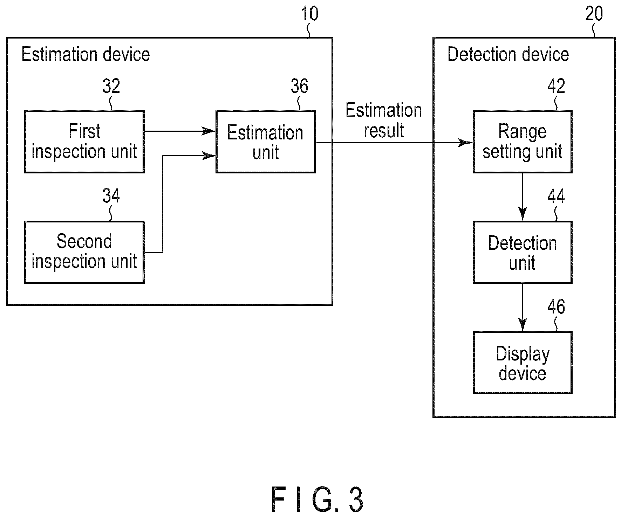

FIG. 3 is a diagram for illustrating an example of an inspection system according to a second arrangement. The inspection system includes the estimation device 10 and the detection device 20. The estimation device 10 includes a plurality of inspection units and one estimation unit 36. Examples of the inspection unit include a metal detector, an X-ray camera, an infrared camera, and a radar. The estimation device 10 illustrated in FIG. 3 includes a first inspection unit 32 and a second inspection unit 34. The number of the inspection units may be three or more. In a case where the estimation device 10 includes the plurality of inspection units, the plurality of inspection units respectively inspect different primary inspection ranges of a primary inspection target person. For example, the primary inspection range of the first inspection unit 32 is a left side range of an inspection target person. In addition, the primary inspection range of the second inspection unit 34 is a right side range of the inspection target person. For another example, the primary inspection range of the first inspection unit 32 is an upper side range of an inspection target person. In addition and the primary inspection range of the second inspection unit 34 is a lower side range of the inspection target person. The first inspection unit 32 outputs the inspection result to the estimation unit 36. The second inspection unit 34 outputs the inspection result to the estimation unit 36.

The estimation unit 36 estimates a secondary inspection target person from among the primary inspection target persons based on the inspection result of the first inspection unit 32 and the inspection result of the second inspection unit 34. In addition, the estimation unit 36 estimates a secondary inspection range among the secondary inspection target person based on the inspection results of the first inspection unit 32 and the second inspection unit 34. The estimation unit 36 estimates the primary inspection range of the first inspection unit 32 or the primary inspection range of the second inspection unit 34 as the secondary inspection range.

The estimation unit 36 stores a standard inspection result of the first inspection unit 32 (or the second inspection unit 34) that has inspected a person who does not possess a predetermined object. The standard inspection result is measured in advance. The standard inspection result is input to the inspection system. The estimation unit 36 compares the inspection result of the first inspection unit 32 and the inspection result of the second inspection unit 34 with the standard inspection result. In a case where the inspection result of the first inspection unit 32 is similar to the standard inspection result and the inspection result of the second inspection unit 34 is not similar to the standard inspection result, the estimation unit 36 estimates that there is a possibility that the primary inspection target person possesses the predetermined object. The estimation unit 36 estimates the primary inspection target person to be the secondary inspection target person. In addition, the estimation unit 36 estimates that there is a possibility that the predetermined object is present in the primary inspection range of the second inspection unit 34. In a case where the inspection result of the second inspection unit 34 is similar to the standard inspection result and the inspection result of the first inspection unit 32 is not similar to the standard inspection result, the estimation unit 36 estimates that there is a possibility that the primary inspection target person possesses the predetermined object. The estimation unit 36 estimates the primary inspection target person to be the secondary inspection target person. In addition, the estimation unit 36 estimates that there is a possibility that the predetermined object is present in the primary inspection range of the first inspection unit 32.

For example, in a case where the inspection result of the first inspection unit 32 inspecting the right side range is similar to the standard inspection result and the inspection result of the second inspection unit 34 inspecting the left side range is not similar to the standard inspection result, the estimation unit 36 estimates that there is a possibility that the predetermined object is present in the left side range.

The detection device 20 includes a range setting unit 42, a detection unit 44, and a display device 46. The estimation unit 36 outputs the estimation result to the range setting unit 42. The range setting unit 42 sets the secondary inspection range in accordance with the estimation result. The detection unit 44 detects whether or not the predetermined object is present in the secondary inspection range. Examples of the detection unit 44 are a metal detector, an X-ray camera, an infrared camera, and a radar. A synthetic aperture radar may be used as the radar. The display device 46 displays the detection result of the detection unit 44.

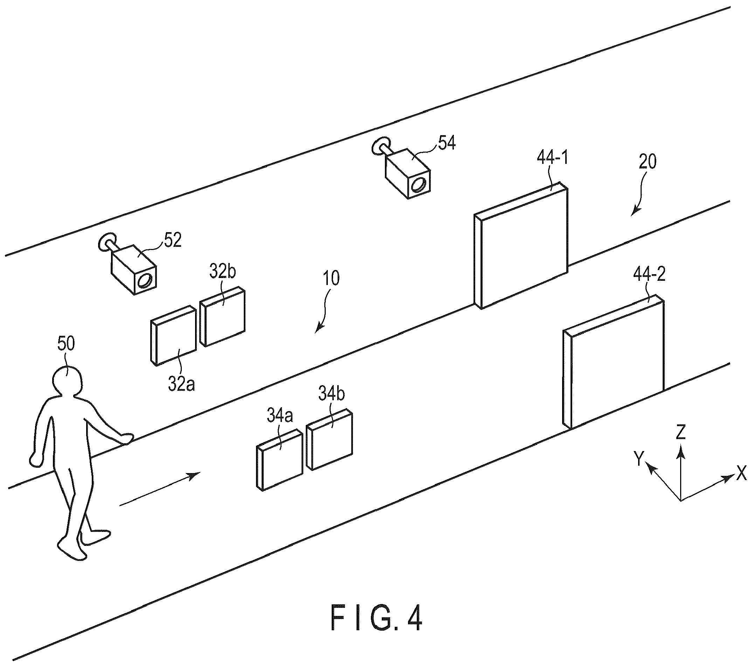

FIG. 4 is a diagram for illustrates an example of arrangement of the estimation device 10 and the detection device 20 of the inspection system according to the second arrangement. Similarly to the first arrangement, the estimation device 10 and the detection device 20 are installed along a passage where the person 50 walks. The estimation device 10 is arranged on a near side in a traveling direction of the person 50, and the detection device 20 is arranged on a front side in the traveling direction. The inspection target person 50 may include a stationary person.

The first inspection unit 32 includes first inspection units 32a and 32b. The second inspection unit 34 includes second inspection units 34a and 34b. The number of the first inspection units 32a and 32b and the number of the second inspection units 34a and 34b are not limited to the illustrated example. The first inspection units 32a and 32b are installed at a left side of the passage. The second inspection units 34a and 34b are installed at a right side of the passage. The estimation device 10 can inspect the entire body of the person 50 in the primary inspection range by the inspection units 32a, 32b, 34a, and 34b. Each of the inspection units 32a, 32b, 34a, and 34b is a metal detector, an X-ray camera, an infrared camera, or a radar.

The detection unit 44 includes detection units 44-1 and 44-2. The detection unit 44-1 is installed at the left side of the passage. The detection unit 44-2 is installed at the right side of the passage. Each of the detection units 44-1 and 44-2 is a metal detector, an X-ray camera, an infrared camera, a radar, or a synthetic aperture radar.

A camera 52 is arranged on one side of the passage. The estimation device 10 can detect that the person 50 enters the primary inspection range of the first inspection unit 32 or the second inspection unit 34 based on an image captured by the camera 52. When the person 50 entering the primary inspection range is detected, the estimation device 10 starts the inspection of the person 50 by the first inspection unit 32 and the second inspection unit 34.

Without providing the camera 52, the estimation device 10 may detect the person 50 entering the primary inspection range based on the inspection result of the first inspection unit 32. The estimation device 10 may detect the person 50 entering the primary inspection range based on the inspection result of the second inspection unit 34.

A camera 54 is arranged on one side of the passage. The detection device 20 can detect that the person 50 enters the secondary inspection range of the detection device 20 based on the image captured by the camera 54. When the person 50 entering the secondary inspection range is detected, the detection device 20 starts the inspection of the person 50. Without providing the camera 54, the detection device 20 may detect the person 50 entering the secondary inspection range based on the detection result of the detection unit 44.

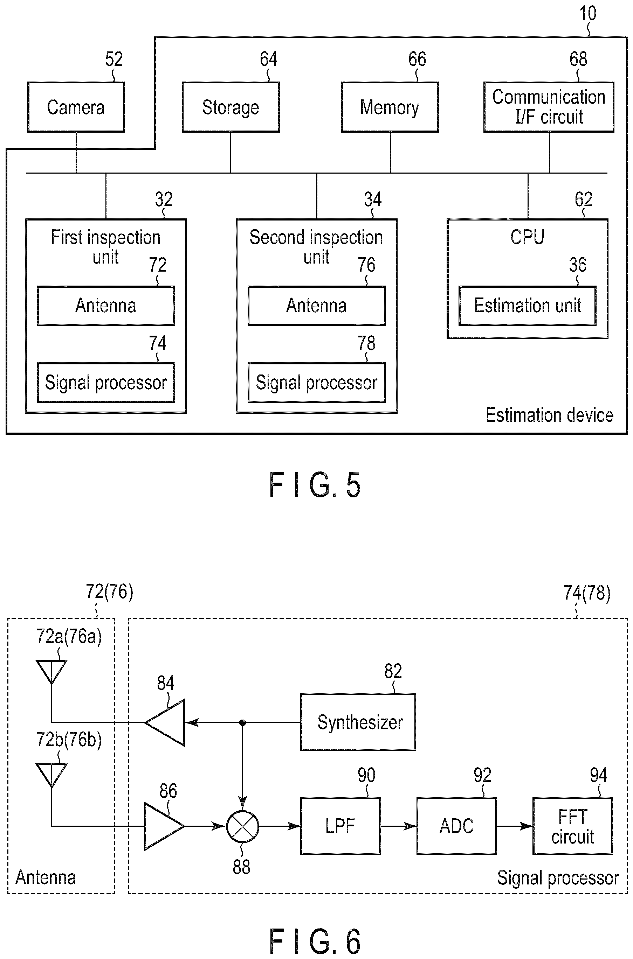

FIG. 5 is a diagram for describing a detailed example of the estimation device 10 according to the second arrangement. The first inspection unit 32 and the second inspection unit 34 are connected to a bus line of a CPU 62. The camera 52, a storage 64, a memory 66, and a communication I/F circuit 68 are connected to the bus line. Examples of the first inspection unit 32 and the second inspection unit 34 are radars. An electromagnetic wave used in the radar includes an electromagnetic wave having a wavelength of 1 mm to 30 mm. An electromagnetic wave having a wavelength of 1 mm to 10 mm may be referred to as a millimeter wave. An electromagnetic wave having a wavelength of 10 mm to 100 mm may be referred to as a microwave. When the electromagnetic wave is emitted to a person, the electromagnetic wave is reflected by an object present on a propagation path of the electromagnetic wave. The reflection intensity of the radio wave reflected at a certain distance is measured. Therefore, it is possible to determine whether the object present at the distance is a human body or a dangerous object such as a handgun and an explosive. The inspection accuracy is proportional to the number of electromagnetic wave emission points per person. In the primary inspection, so-called coarse scanning is performed. Thus, the number of electromagnetic wave emission points per person may be several tens. Accordingly, a time required for the primary inspection for a large number of persons is short.

Each of the inspection units 32a and 32b of the first inspection unit 32 includes an antenna 72 and a signal processor 74. The antenna 72 may include at least one transmitting and receiving antenna. The antenna 72 may include at least one transmitting antenna and at least one receiving antenna. An emission direction or a position of the emission point of the electromagnetic wave of the antenna 72 may be mechanically changed by a mechanical scanning mechanism. The emission direction or the position of the emission point may be electronically changed by an electronic scanning circuit provided in the signal processor 74. The first inspection unit 32 may include both the mechanical scanning mechanism and the electronic scanning circuit.

Each of the inspection units 34a and 34b of the second inspection unit 34 includes an antenna 76 and a signal processor 78. The antenna 76 may include at least one transmitting and receiving antenna. The antenna 76 may include at least one transmitting antenna and at least one receiving antenna. An emission direction or a position of the emission point of the electromagnetic wave of the antenna 76 can be mechanically changed by a mechanical scanning mechanism. The emission direction or the position of the emission point can be electronically changed by an electronic scanning circuit provided in the signal processor 78. The second inspection unit 34 may include both the mechanical scanning mechanism and the electronic scanning circuit.

An example of the antennas 72 and 76 is a microstrip antenna (also referred to as a patch antenna).

The signal processors 74 and 78 cause the antennas 72 and 76 to emit an electromagnetic wave. The signal processors 74 and 78 cause the antennas 72 and 76 to receive a reflected wave. Then, the signal processors 74 and 78 process a received signal from the antennas 72 and 76 to generate a signal indicating the possessions of the person. The signal processors 74 and 78 may be constructed integrally with the antennas 72 and 76. The signal processors 74 and 78 may be constructed separately from the antennas 72 and 76, and may be arranged at different positions from the antennas 72 and 76.

The storage 64 is a nonvolatile storage device that stores programs executed by the CPU 62 and various kinds of data, and includes an HDD, an SSD, or the like. The memory 66 is a nonvolatile memory that stores programs and data read out from the storage 64 or various kinds of data generated during inspection. An example of the programs is a program that causes the CPU 62 to execute a function of the estimation unit 36. The CPU 62 functions as the estimation unit 36 by executing the program stored in the memory 66. Note that the estimation unit 36 may be constructed by a hardware.

The estimation device 10 may include a keyboard or a display device. The keyboard may input setting information of estimation accuracy, an adjustment instruction, and the like. The display device may display images of the primary inspection target person and the secondary inspection target person. The display device may also display information of the secondary inspection target person and the secondary inspection range.

The communication I/F circuit 68 transmits the estimation result of the estimation device 10 to the detection device 20 by using a wireless LAN or a wired LAN.

FIG. 6 is a block diagram for illustrating an example of the first inspection unit 32 and the second inspection unit 34 of the estimation device 10 according to the second arrangement. The antennas 72 includes one or more transmitting antennas 72a and one or more receiving antennas 72b. The antennas 76 includes one or more transmitting antennas 76a and one or more receiving antennas 76b. The transmitting antennas 72a and the receiving antennas 72b may not be separately provided. The transmitting antennas 76a and the receiving antennas 76b may not be separately provided. One antenna may transmit an electromagnetic wave and receive an electromagnetic wave.

Each of the signal processors 74 and 78 includes a synthesizer 82, a power amplifier 84, a low noise amplifier 86, a mixer 88, a low pass filter (LPF) 90, an A/D converter (ADC) 92, and a fast Fourier transformation (FFT) circuit 94. A signal generated by the synthesizer 82 is amplified by the power amplifier 84. The power amplifier 84 supplies an output signal to the transmitting antennas 72a and 76a. Then, the electromagnetic wave is emitted from the transmitting antennas 72a and 76a to the primary inspection range. The emitted electromagnetic wave is reflected by all the objects in the primary inspection range. The reflected wave is received by the receiving antennas 72b and 76b. The received signal output from the receiving antenna 72b or 76b is input to a first input terminal of the mixer 88 via the low noise amplifier 86. The output signal of the synthesizer 82 is input to a second input terminal of the mixer 88.

The mixer 88 mixes the transmitted signal and the received signal to generate an intermediate frequency (IF) signal. The intermediate frequency signal is input to the A/D converter 92 via the low pass filter 90. The digital signal output from the A/D converter 92 is analyzed by the fast Fourier transformation (FFT) circuit 94. Then, the reflection intensity of the electromagnetic wave of the object is obtained.

An inspection principle of the first inspection unit 32 and the second inspection unit 34 will be described. There are various combinations of transmitting and receiving antennas of the radar. For example, the reflected wave of the electromagnetic wave emitted from one transmitting antenna may be received by a plurality of receiving antennas. The reflected waves of the radio waves emitted from a plurality of transmitting antennas may be received by one receiving antenna. The reflected waves of the radio waves emitted from a plurality of transmitting antennas may be received by a plurality of receiving antennas. Here, a method for obtaining the reflection intensity in case where the electromagnetic wave emitted from one transmitting antenna is received by one receiving antenna will be described.

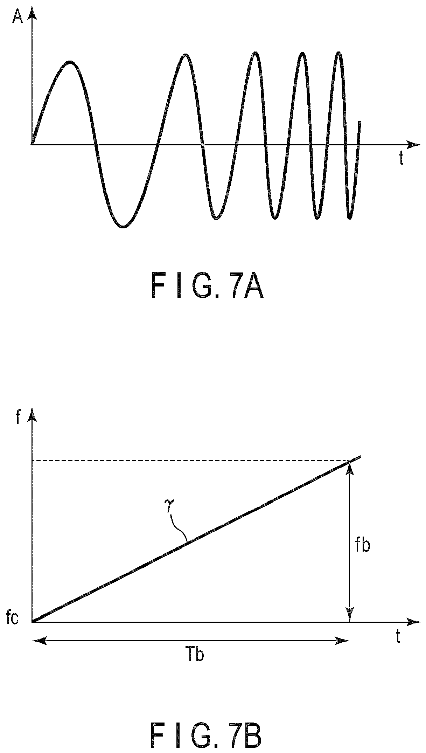

The synthesizer 82 generates a frequency modulated continuous wave (FMCW) signal whose frequency linearly increases with the lapse of time. The FMCW signal is also referred to as a chirp signal. FIGS. 7A and 7B are diagrams for illustrating an example of a waveform of the chirp signal used in the first inspection unit 32 and the second inspection unit 34 of the estimation device according to the second arrangement. When an amplitude A is expressed as a function of time t, the chirp signal is as shown in FIG. 7A. When a frequency f is expressed as a function of the time t, the chirp signal is as shown in FIG. 7B. As illustrated in FIG. 7B, the chirp signal is expressed by a center frequency fc, a modulation bandwidth fb, and a signal time width Tb. A slope of the chirp signal is referred to as a frequency change rate (chirp rate) $\gamma$.

A transmitting wave St(t) of the FMCW signal radiated from the transmitting antennas 72a and 76a is represented by Equation 1.

$$St(t) = \cos[2\pi(fct + \gamma t^2/2)] \quad \text{Equation 1}$$

The chirp rate $\gamma$ is represented by Equation 2.

$$\gamma = fb/Tb \quad \text{Equation 2}$$

At this time, the reflected wave from an object which is located at a distance R away from the transmitting and receiving antennas 72a and 76a is observed with a delay of $\Delta t = 2R/c$ from a transmitting timing. c is a velocity of light. When the reflection intensity of the object is "a", a received signal Sr(t) is represented by Equation 3.

$$Sr(t) = a \times \cos[2\pi fc(t - \Delta t) + \pi\gamma(t - \Delta t)^2]$$
$$Equation\ 3$$

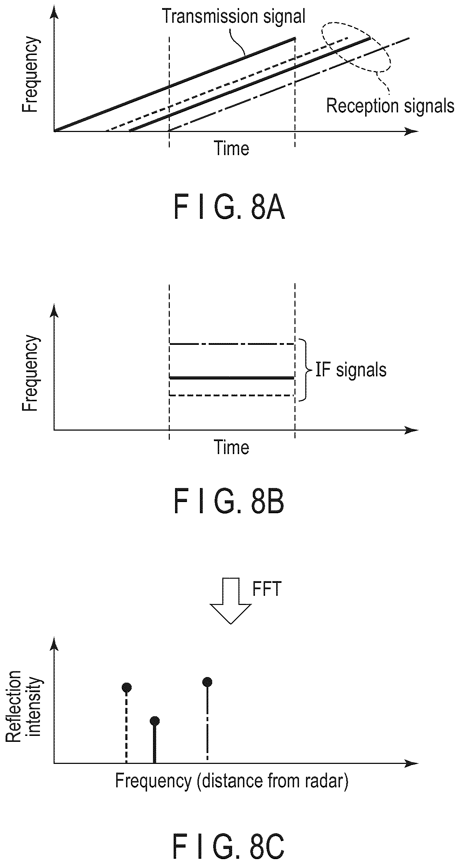

FIGS. 8A to 8C are diagrams for illustrate an example of received signals of the first inspection unit 32 and the second inspection unit 34 of the estimation device 10 according to the second arrangement in a case where there are a plurality of, for example, three objects. FIG. 8A illustrates a relationship between a transmitted/received signal and time. As illustrated in FIG. 8A, the frequency of the transmitted signal linearly changes with time. The received signal is delayed by $\Delta t$ with respect to the transmitted signal. In a case where a plurality of objects exist, a reflected wave from a nearest object is received the earliest as indicated by a broken line, and a reflected wave from a farthest object is received the latest as indicated by an one-dot chain line.

As illustrated in FIG. 6, the received signal is multiplied by the transmitted signal by the mixer 88, and is input to the low pass filter 90. The output signal of the low pass filter 90 is referred to as an IF signal z(t) and is represented by Equation 4.

$$z(t) = a \times \cos(2\pi\Delta t\gamma t) \qquad Equation\ 4$$

FIG. 8B illustrates a relationship between a frequency of the IF signal and time. Under an ideal environment without noise or the like, the frequency is constant for each reflected wave. A frequency of a reflected wave from the nearest object is the lowest as indicated by a broken line. A frequency of a reflected wave from the farthest object is the highest as indicated by a one-dot chain line.

The reflection intensity in a frequency domain can be calculated by performing FFT on the IF signal z(t) of the time domain represented by Equation 4 in the FFT circuit 94. Accordingly, the amplitude at each point of the frequency domain that is a result of the FFT of the IF signal corresponds to the reflection intensity for each distance from the radar. The frequency $f_{if}$ and the distance R from the radar have a relationship of Equation 5.

$$f_{if} = \Delta t\gamma = 2R\gamma/c \qquad Equation\ 5$$

FIG. 8C illustrates a relationship between the frequency and the reflection intensity obtained by performing the FFT on the IF signal in the time domain. In this manner, the amplitude of a frequency-domain signal of the IF signal is obtained. Therefore, the reflection intensity for each distance from the radar can be obtained.

The estimation unit 36 detects a distance to the person from the image captured by the camera 52. For example, in a case where the estimation unit 36 detects that the distance to the person is 2 meters, the first inspection unit 32 and the second inspection unit 34 obtain the frequency $f_{if}$ of the IF signal corresponding to a point at the distance R = 2 meters from Equation 5. The first inspection unit 32 and the second inspection unit 34 can extract the reflection intensity at the frequency $f_{if}$ as the reflection intensity of the object from among reflection intensities of a plurality of received signals as illustrated in FIG. 8C.

The above-described processing is performed for each emission point while the emission point of the electromagnetic wave is changed (scanned) along a scanning direction.

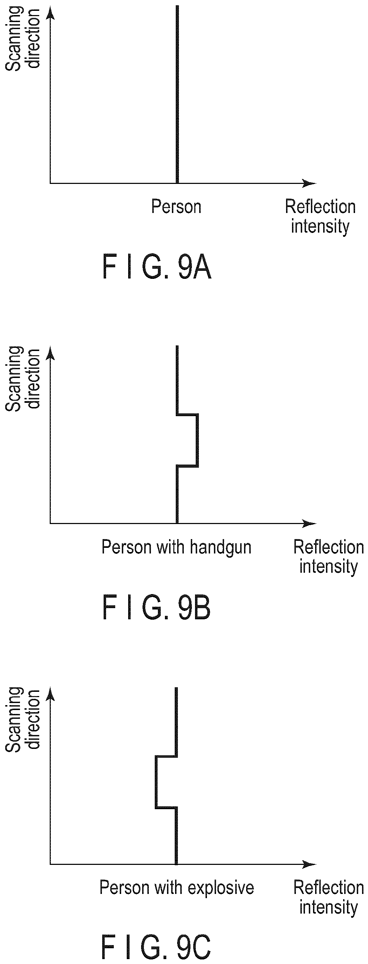

FIGS. 9A to 9C are diagrams for illustrating an example of a reflection intensity distribution obtained by the first inspection unit 32 and the second inspection unit 34 of the estimation device 10 according to the second arrangement. As illustrated in FIGS. 9A to 9C, the reflection intensity distribution of an electromagnetic wave on a scanning line varies depending on a substance that reflects the electromagnetic wave.

FIG. 9A illustrates a reflection intensity distribution of electromagnetic waves in a case where a person does not possess any object. In this case, since the electromagnetic wave is reflected by the skin of the person, the reflection intensity of the electromagnetic wave does not change regardless of the position of the emission point. The reflection intensity distribution is a flat distribution. The reflection intensity distribution of FIG. 9A is a standard reflection intensity distribution corresponding to the standard inspection result.

FIG. 9B illustrates a reflection intensity distribution of electromagnetic waves in a case where the person possesses a handgun (metal) at a center in the scanning direction. In this case, since a metal has higher reflection intensity than the skin, the reflection intensity of the electromagnetic wave at the emission point corresponding to the position of the handgun is higher than the reflection intensity of the electromagnetic wave at other points. Since a horizontal axis indicates the reflection intensity (the right is the higher reflection intensity), the reflection intensity of the electromagnetic wave has a rightward convex distribution.

FIG. 9C illustrates a reflection intensity distribution of electromagnetic waves in a case where the person possesses an explosive at the center in the scanning direction. Since an explosive absorbs an electromagnetic wave better than the skin, the reflection intensity at the emission point corresponding to a position of the explosive is lower than the reflection intensity at other points. The reflection intensity of the electromagnetic wave has a leftward convex distribution. The distribution can be specified by a difference between reflection intensity values at least at two points.

The first inspection unit 32 and the second inspection unit 34 estimate a range having a possibility that the predetermined object is present. Therefore, a high resolution having a difference (for example, 1 cm) between the clothing and the human body is not required as a resolution in a distance direction. The resolution of about several centimeters is sufficient for estimation of the first inspection unit 32 and the second inspection unit 34. The first inspection unit 32 and the second inspection unit 34 can use inexpensive in-vehicle millimeter-wave radars being currently distributed.

In this manner, when the reflection intensity of the person is acquired at several points (at least two points) on the scanning line, the estimation unit 36 compares a shape of the reflection intensity distribution output from the first inspection unit 32 and a shape of the reflection intensity distribution output from the second inspection unit 34 with a shape of the standard reflection intensity distribution. For example, it is assumed that the first inspection unit 32 that inspects the left side range outputs the reflection intensity distribution illustrated in FIG. 9B and the second inspection unit 34 that inspects the right side range outputs the reflection intensity distribution illustrated in FIG. 9A. A shape of the reflection intensity distribution of the right side range is more different from the standard reflection intensity than the reflection intensity distribution of the left side range. In this case, the estimation unit 36 estimates that there is a possibility that the handgun is present in the right side range of the person.

The estimation unit 36 may determine the difference in the shape of the reflection intensity distribution by a threshold or by machine learning.

Even though the estimation device 10 includes three or more inspection units, the estimation unit 36 estimates the secondary inspection range based on the difference in the shape of the reflection intensity distribution of each of the three or more inspection units and the standard reflection intensity distribution.

According to the inspection system of the second arrangement, the estimation device 10 includes at least two inspection units 32 and 34 arranged to receive reflected waves from different ranges of the primary inspection target person. The estimation device 10 estimates that there is a possibility that the predetermined object is present in the secondary inspection range.

The secondary inspection rage is an inspection range of the first inspection unit 32 if the shape of the reflection intensity distribution of the first inspection unit 32 is more different from the standard reflection intensity than the reflection intensity distribution of the second inspection unit 34. The secondary inspection rage is an inspection range of the second inspection unit 34 if the shape of the reflection intensity distribution of the second inspection unit 34 is more different from the standard reflection intensity than the reflection intensity distribution of the first inspection unit 32. As a result, the secondary inspection target person and the secondary inspection range can be accurately estimated in a short time.

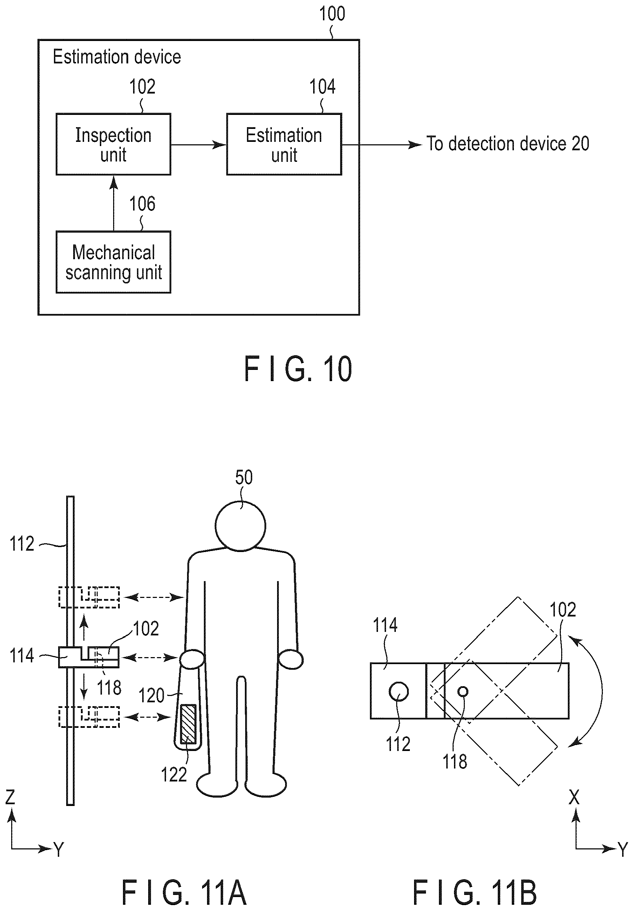

FIG. 10 is a diagram illustrating a modification (estimation device 100) of the estimation device 10 according to the second arrangement. The estimation device 100 includes an inspection unit 102, an estimation unit 104, and a mechanical scanning unit 106. An example of the inspection unit 102 is a millimeter wave radar. A metal detector, an X-ray camera, or an infrared camera may be used as the inspection unit 102.

The inspection unit 102 includes an antenna and a signal processor similar to the antenna and the signal processor of the first inspection unit 32 or the second inspection unit 34 illustrated in FIG. 5. The antenna may include at least one transmitting and receiving antenna. The antenna may include at least one transmitting antenna and at least one receiving antenna.

As illustrated in FIG. 5, the estimation device 10 includes the two inspection units 32 and 34 having two different inspection ranges. The estimation device 100 includes a single inspection unit 102 having a single inspection range. The estimation unit 104 performs the same processing as the processing of the estimation unit 36 illustrated in FIG. 5. The mechanical scanning unit 106 changes a directivity of the inspection unit 102 by changing the emission direction or the position of the emission point of the electromagnetic wave of the antenna of the inspection unit 102. Therefore, the estimation unit 104 to estimate a range in which there is a possibility that the predetermined object is present based on the reflection intensity distributions from the different ranges of the primary inspection target person output from the inspection unit 102.

In a state where the mechanical scanning unit 106 sequentially sets the directivity of the inspection unit 102 to at least two directivities, the inspection unit 102 sequentially obtains the intensity distributions of the reflected wave from the different ranges of the primary inspection target person. At least two reflection intensity distributions sequentially output from the inspection unit 102 are input to the estimation unit 104.

According to the estimation device 100, the electromagnetic wave is emitted from the inspection unit 102 while the directivity of the inspection unit 102 is changed such that the inspection unit 102 can receive reflected waves from different ranges (for example, the upper side range and the lower side range) of the person. Thus, it is possible to provide the inspection system capable of performing estimation similar to the estimation device 10 illustrated in FIG. 5 even though the number of inspection units 102 is singular.

FIGS. 11A and 11B illustrate an example of the mechanical scanning unit 106 of the estimation device 100. FIG. 11A illustrates the person 50 as viewed from the front of the passage. The person 50 hides a predetermined object 122 in a bag 120 held in a right hand. FIG. 11B illustrates the inspection unit 102 as viewed from above the passage.

As illustrated in FIG. 11A, the inspection unit 102 is arranged on the right side of the person 50. The inspection unit 102 emits an electromagnetic wave in a horizontal direction (X-Y plane) with respect to the person 50. A guide rail 112 extending in a vertical direction (Z direction) is installed at a floor of the primary inspection range. The guide rail 112 may be installed along a wall of the primary inspection range. A slider 114 is slidably provided with respect to the guide rail 112. The inspection unit 102 is attached to the slider 114 to emit the electromagnetic wave in the horizontal direction. The mechanical scanning unit 106 slides the slider 114 in the vertical direction along the guide rail 112.

As a result, the inspection unit 102 that emits the electromagnetic wave in the horizontal direction is moved up and down in the vertical direction. The directivity of the inspection unit 102 is set to a plurality of directivities different in the vertical direction.

As illustrated in FIG. 11B, the inspection unit 102 is attached to the slider 114 to be rotatable in a horizontal plane about a shaft 118 parallel to the guide rail 112. The mechanical scanning unit 106 slides the slider 114 in the vertical direction and rotates the inspection unit 102 in the horizontal plane. The sector scanning is performed on the person 50 in the horizontal plane.

The directivity of the inspection unit 102 can be electronically changed not by the mechanical scanning unit 106 but by the electronic scanning circuit provided in the signal processor.

The number of inspection units 102 is not limited to one. The number of inspection units 102 may be two or more. In a case where the plurality of inspection units 102 are provided, the directivity of each inspection unit 102 is changed. Since the directivities of the plurality of inspection units 102 are different, the number of the settings of the directivity of the inspection unit can be significantly increased by changing the directivity of each inspection unit 102.

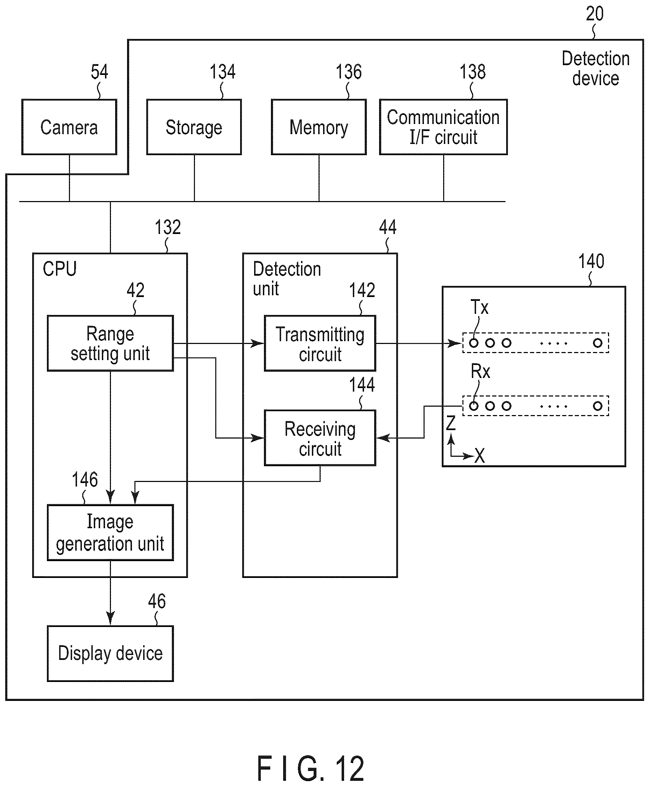

FIG. 12 is a diagram for illustrating a detailed example of the detection device 20 according to the second arrangement. The detection device 20 uses a synthetic aperture radar. The camera 54, a storage 134, a memory 136, a communication I/F circuit 138, and a CPU 132 are connected to each other via a bus line.

The storage 134 is a nonvolatile storage device that stores programs executed by the CPU 132 and various kinds of data, and includes an HDD, an SSD, or the like. The memory 136 is a nonvolatile memory that stores programs and data read out from the storage 134 or various kinds of data generated during inspection. An example of the programs is a program that causes the CPU 132 to execute functions of the range setting unit 42 and an image generation unit 146. The CPU 132 functions as the range setting unit 42 and the image generation unit 146 by executing the programs stored in the memory 136. Note that the range setting unit 42 and the image generation unit 146 may be constructed by a hardware.

The communication I/F circuit 138 receives the estimation result of the estimation device 10 by using a wireless LAN or a wired LAN.

The detection unit 44 is connected to the CPU 132. The detection unit 44 includes a transmitting circuit 142 and a receiving circuit 144. The transmitting circuit 142 and the receiving circuit 144 are connected to an array antenna 140.

The array antenna 140 includes at least one transmitting antenna Tx and at least one receiving antenna Rx. The array antenna 140 is arranged on an X-Z plane parallel to the side of the passage (FIGS. 2 and 4). A plurality of transmitting antennas Tx and a plurality of receiving antennas Rx may be arranged in any array. For example, the plurality of transmitting antennas Tx and the plurality of receiving antennas Rx may be arrayed in a one-dimensional array. The plurality of transmitting antennas Tx and the plurality of receiving antennas Rx may be arrayed in a two-dimensional array.

The transmitting circuit 142 corresponds to the synthesizer 82 and the power amplifier 84 of FIG. 6. The transmitting circuit 142 is connected to the plurality of transmitting antennas Tx. The transmitting circuit 142 sequentially supplies the chirp signal to the plurality of transmitting antennas Tx. The transmitting circuit 142 causes the plurality of transmitting antennas Tx to sequentially emit the electromagnetic wave.

The plurality of receiving antennas Rx simultaneously receive the reflected waves of the electromagnetic wave emitted from one transmitting antenna Tx. The plurality of receiving antennas Rx are connected to the receiving circuit 144. The receiving circuit 144 corresponds to the low noise amplifier 86, the mixer 88, the LPF 90, the ADC 92, and the FFT circuit 94 in FIG. 6. The receiving circuit 144 down-converts the signal from the receiving antenna Rx into an IF signal. Then, the receiving circuit 144 performs FFT processing on the IF signal to generate reflection intensity information. The receiving circuit 144 supplies the reflection intensity information to the image generation unit 146.

The image generation unit 146 performs a synthetic aperture processing on the reflection intensity information to generate an image signal. The image generation unit 146 supplies the image signal to the display device 46. The operator visually observes the image displayed on the display device 46 and determines whether or not the predetermined object is present. The synthetic aperture radar generates an image wherein the predetermined object put in a bag or the predetermined object hidden under clothes is visualized. Accordingly, the predetermined object can be inspected by being visually observed by the operator.

Instead of the inspection through the visual observation by the operator, the image generation unit 146 may perform a threshold processing on the image signal. The image generation unit 146 may determine whether or not a predetermined object is present based on the threshold processing. The determination result may be displayed on the display device 46.

The range setting unit 42 receives range information in the estimation result from the estimation device 10. The range setting unit 42 transmits a control signal for controlling an operation to the transmitting circuit 142, the receiving circuit 144, and the image generation unit 146 in accordance with the range information. Operation examples of the transmitting circuit 142, the receiving circuit 144, and the image generation unit 146 will be described.

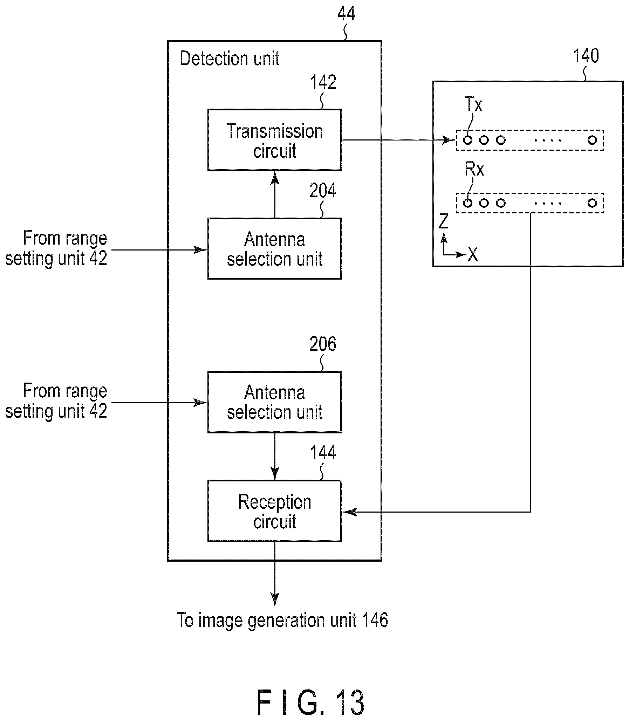

FIG. 13 is a diagram for describing a first operation example of the detection device 20 according to the second arrangement. The detection unit 44 includes an antenna selection unit 204 and an antenna selection unit 206 in addition to the transmitting circuit 142 and the receiving circuit 144. The antenna selection unit 204 is connected to the transmitting circuit 142. The antenna selection unit 204 selects a transmitting antenna Tx which emits the electromagnetic wave in response to the control signal from the range setting unit 42. The antenna selection unit 206 is connected to the receiving circuit 144. The antenna selection unit 206 selects a receiving antenna Rx which receives the electromagnetic wave in response to the control signal from the range setting unit 42.

The synthetic aperture radar sequentially emits the electromagnetic waves from all the transmitting antennas. The reflected waves are received by all the receiving antennas. Thus, the synthetic aperture radar performs synthetic aperture processing on the received signals from all pairs of transmitting and receiving antennas to generate an image. However, depending on the position of the secondary inspection range, an electromagnetic wave emitted from a certain transmitting antenna or an electromagnetic wave received by a certain receiving antenna may not contribute to the synthetic aperture processing (image generation).

A pair of the transmitting antenna and the receiving antenna that contributes to the synthetic aperture processing is limited in accordance with the position of the secondary inspection range. Thus, the transmitting circuit 142 emits the electromagnetic wave only from the transmitting antenna Tx selected by the antenna selection unit 204 in accordance with the position of the secondary inspection range. The receiving circuit 144 receives the signal from only the receiving antenna Rx selected by the antenna selection unit 206 in accordance with the position of the secondary inspection range.

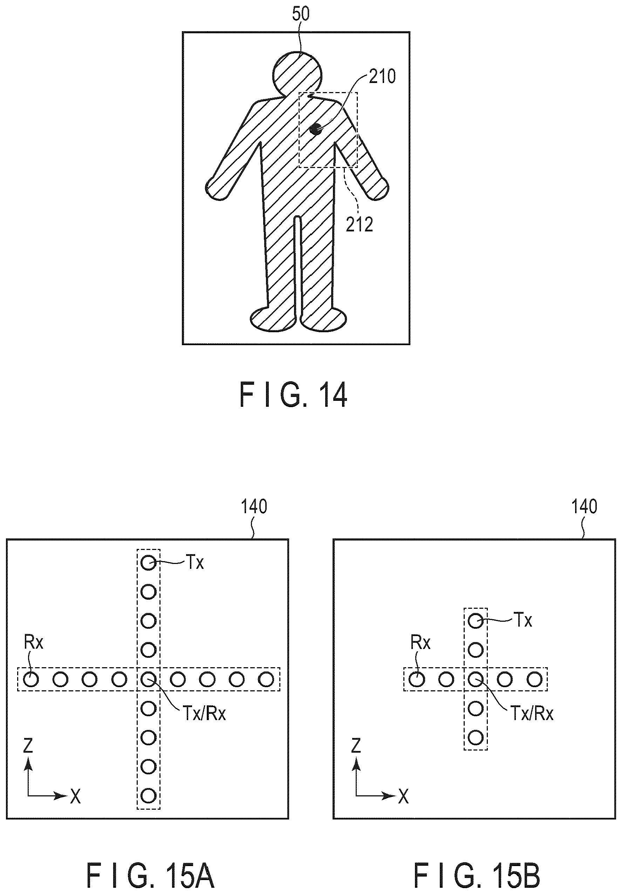

FIG. 14 is a diagram for illustrating an example of an image of the person 50 generated by the detection device 20 through the synthetic aperture processing according to the second arrangement. The estimation device 10 estimates that a vicinity of a left chest of the person 50 is an object range 212 in which there is a possibility that a predetermined object 210 is present.

FIGS. 15A and 15B are diagrams for illustrating an example of operations of the antenna selection units 204 and 206 of the detection device 20 according to the second arrangement. Here, the plurality of transmitting antennas Tx are arrayed in a line along the Z direction. The plurality of receiving antennas Rx are arrayed in a line along the X direction. Both the transmitting and receiving antennas are arrayed in a cross shape. An antenna to be arranged at an intersection of the cross is a transmitting and receiving antenna Tx/Rx.

In order to generate an image of the entire body of the person 50, nine transmitting antennas Tx and nine receiving antennas Rx are required as illustrated in FIG. 15A. However, some of the electromagnetic waves emitted from all the transmitting antennas Tx may not be reflected by the object range 212 that is a part of the person 50. Some of reflected waves from the object range 212 may not be received by the receiving antennas Rx. An electromagnetic wave emitted from some of the transmitting antennas Tx is not emitted to the object range 212.

Only some transmitting and receiving antennas, for example, five transmitting antennas Tx and five receiving antennas Rx illustrated in FIG. 15B may contribute to generate an image of the object range 212. Other transmitting antenna and receiving antenna may not contribute to generate the image. In this case, the antenna selection unit 204 selects five transmitting antennas Tx illustrated in FIG. 15B. The antenna selection unit 206 selects five receiving antennas Rx illustrated in FIG. 15B.

According to the first operation example, not all the transmitting and receiving antennas are used, but the positions and the numbers of the transmitting antennas emitting an electromagnetic wave and the receiving antennas receiving the reflected wave are selected in accordance with the position and the size of the secondary inspection range. As a result, a transmitting and receiving time of the electromagnetic wave is shortened. A power consumption for transmitting and receiving can be suppressed. Therefore, the predetermined object present in the secondary inspection range can be efficiently inspected in a short time.

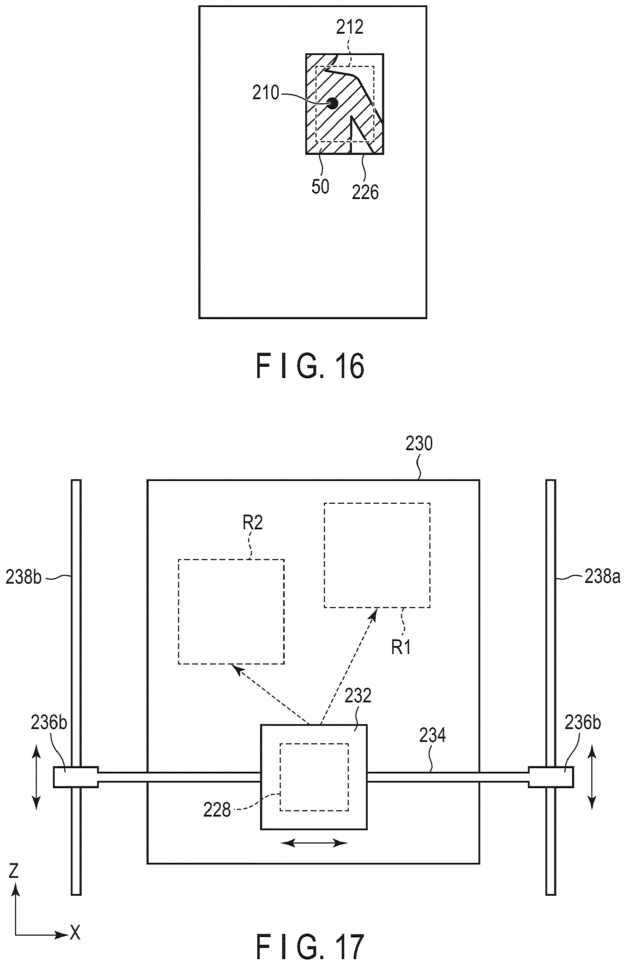

FIG. 16 is a diagram for illustrating a second operation example of the detection device 20 according to the second arrangement. As illustrated in FIG. 14, the image generation unit 146 is configured to generate an image of the person 50 in one entire frame. However, since the detection device 20 may inspect the possession present in the secondary inspection range 212, it is not necessary to generate the image of the entire one frame.

The detection device 20 may generate an image of a pixel region 226 including the secondary inspection range 212. The range setting unit 42 (FIG. 12) sets an imaging range corresponding to the range information in the image generation unit 146. For example, an image of one frame includes 1000 (horizontal) × 1200 (vertical) pixels.

In a case where the range information indicates the vicinity of the left chest, the range setting unit 42 controls the image generation unit 146 to generate an image in a range of 400 × 500 pixels as illustrated in FIG. 16. In this case, the number of the transmitting and the receiving antennas to be used is set to all the transmitting antennas Tx and all the receiving antennas Rx similarly to the case where the image of the entire body is generated.

According to the second operation example, the transmitting and receiving time of the electromagnetic wave is not shortened. However, a synthetic aperture calculation time is shortened. A power consumption related to the calculation can be suppressed. Therefore, the predetermined object present in the secondary inspection range can be efficiently inspected in a short time.

The first operation example and the second operation example may be combined. The positions and the numbers of the transmitting antenna emitting the electromagnetic wave and the receiving antennas receiving the reflected wave are selected in accordance with the position and the size of the secondary inspection range. The range to be imaged is selected. As a result, the transmitting and receiving time of the electromagnetic wave and the synthetic aperture calculation time are shortened. The predetermined object present in the secondary inspection range can be efficiently inspected in a short time.

FIG. 17 is a diagram for illustrating a modification of the array antenna 140 (array antenna 228) according to the second arrangement. FIG. 17 is a diagram viewed from the side of the passage. The size of the secondary inspection range is a size of a partial range of the person. The position of the secondary inspection range is not previously determined. Therefore, the array antenna 140 needs to include a large number of transmitting and receiving antennas such that the entire body of the person can be captured.

As illustrated in FIGS. 15A and 15B, the antennas required to generate an image in the secondary inspection range correspond to the size and the position of the secondary inspection range. When the size of the secondary inspection range is constant, the number of antennas required to generate an image in the secondary inspection range is smaller than the number of antennas required to generate an image of the entire body of the person.

As illustrated in FIG. 15B, the array antenna 228 includes as many antennas as to generate an image in a partial range of one frame.

Two vertical poles 238a and 238b extending in the vertical direction (Z direction) are respectively installed at both the sides of the passage. Sliders 236a and 236b are attached to two vertical poles 238a and 238b, respectively. The sliders 236a and 236b are movable in the vertical direction along the vertical poles 238a and 238b, respectively. Both ends of a horizontal pole 234 are fixed to the sliders 236a and 236b, respectively.

The array antenna 228 is mounted on a board 232. The board 232 is attached to the horizontal pole 234 to be movable in the horizontal direction (X direction) along the horizontal pole 234.

A scanning mechanism is provided. The scanning mechanism moves the board 232 in the horizontal direction and moves the sliders 236a and 236b in the vertical direction. The scanning mechanism moves the board 232 in the horizontal direction in accordance with the position of the secondary inspection range. In addition, the scanning mechanism moves the sliders 236a and 236b in the vertical direction in accordance with the position of the secondary inspection range. Therefore, the scanning mechanism can displace the array antenna 228 to any positions, for example R1 and R2, in a first inspection range 230.

In a case where the detection device 20 generates the image of the entire body of the person by using the synthetic aperture radar, a large number of antennas may be required, a device scale may become large, an inspection time may become long, and power consumption may become large. These problems are resolved by using the array antenna 228 including the number of antennas corresponding to the size of the secondary inspection range.

When the position of the array antenna 228 is fixed, the image of the secondary inspection range cannot be generated depending on the position of the secondary inspection range. When the scanning mechanism is provided as illustrated in FIG. 17, the image of the secondary inspection range can be generated regardless of where the secondary inspection range is present in the primary inspection range.

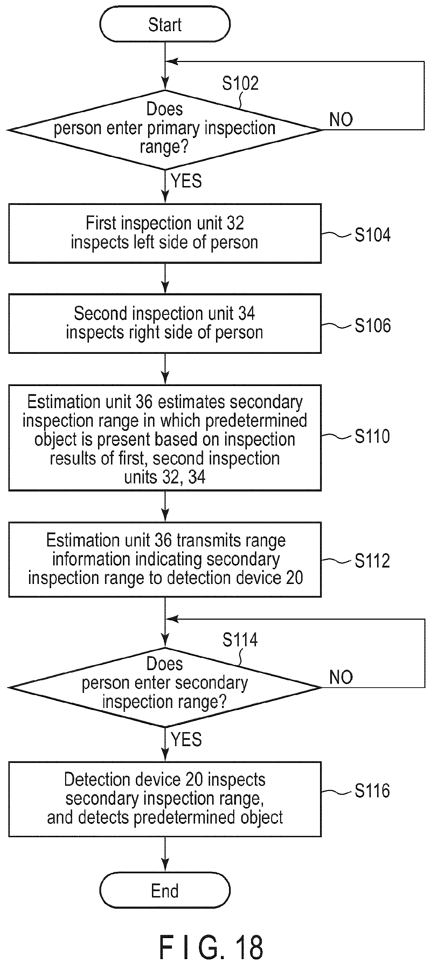

FIG. 18 is a flowchart for illustrating an example of basic processing of the inspection system according to the second arrangement.

The estimation unit 36 determines whether or not the person enters the primary inspection range based on the captured image of the camera 52 (S102). The estimation unit 36 repeats the determination (S102) until the person entering the primary inspection range is detected.

When the person entering the primary inspection range is detected (S102; YES), the first inspection unit 32 inspects the left side range of the person (S104). Specifically, the electromagnetic wave is emitted from the antenna 72. The reflected wave of the person is received by the antenna 72. Then, the signal processor 74 obtains the reflection intensity distribution.

The second inspection unit 34 inspects the right side range of the person (S106). Specifically, the electromagnetic wave is emitted from the antenna 76. The reflected wave of the person is received by the antenna 76. Then, the signal processor 78 obtains the reflection intensity distribution.

The estimation unit 36 estimates the secondary inspection range in which the predetermined object is present based on the inspection result of the first inspection unit 32 and the inspection result of the second inspection unit 34 (S110).

The estimation unit 36 transmits the range information indicating the secondary inspection range to the detection device 20 (S112).

The estimation unit 36 determines whether or not the person enters the secondary inspection range based on the captured image of the camera 54 (S114). The estimation unit 36 repeats the determination (S114) until the person entering the secondary inspection range is detected.

When the person entering the secondary inspection range is detected (S114; YES), the detection device 20 inspects the secondary inspection range, and detects whether or not the predetermined object is present in the secondary inspection range (S116).

Third Arrangement

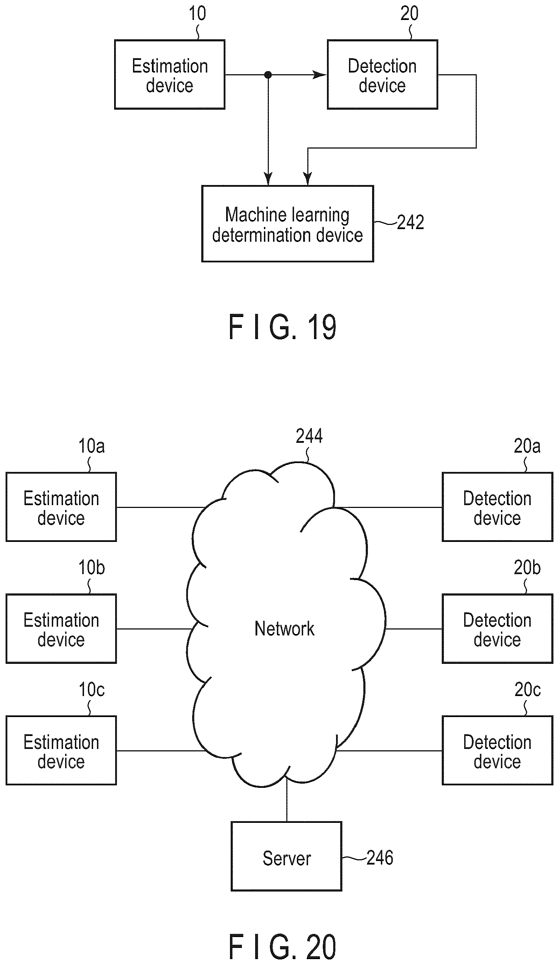

FIG. 19 is a diagram illustrating an example of an inspection system according to a third arrangement. The inspection system of the third arrangement includes a machine learning determination device 242 in addition to the estimation device 10 and the detection device 20.

The detection result of the detection device 20 is input to the machine learning determination device 242. An example of the machine learning determination device 242 is a neural network (for example, a convolutional neural network). The machine learning determination device 242 performs machine learning by using previous detection results of the detection device 20. When the detection result of the detection device 20 is input to the machine learning determination device 242, the machine learning determination device 242 outputs the determination result. The determination result indicates the presence or absence of a predetermined object and the type of the predetermined object.

Note that, in addition to the detection result of the detection device 20, the estimation result of the estimation device 10 may be used to perform the machine learning. In this case, since the number of input signals for machine learning increases, the determination accuracy of the machine learning determination device 242 is improved.

Furthermore, in a case where the estimation device 10 also outputs material information of the predetermined object, the machine learning determination device 242 may performs machine learning by using the material information. Therefore, the determination accuracy is further improved.

Fourth Arrangement

FIG. 20 is a diagram for illustrating an example of an inspection system according to a fourth arrangement. The inspection system includes a plurality of estimation devices 10a, 10b, and 10c, a plurality of detection devices 20a, 20b, and 20c, and a server 246. The number of estimation devices 10a to 10c does not need to match the number of detection devices 20a to 20c.

The plurality of estimation devices 10a to 10c, the plurality of detection devices 20a to 20c, and the server 246 are connected to each other via a network 244. The estimation results from the plurality of estimation devices 10a to 10c are transmitted to the server 246. A person primarily inspected by any of the estimation devices 10a, 10b, and 10c does not need to be secondarily inspected by predetermined detection devices 20a, 20b, and 20c. The person may be secondarily inspected by any of the detection devices 20a, 20b, and 20c.

The estimation devices 10a to 10c execute tagging processing on the person primarily inspected. In the tagging processing, identification (ID) information is assigned to the person. A first gate is arranged in front of the estimation devices 10a to 10c. A second gate is arranged in front of the detection devices 20a to 20c. It is necessary to hold a predetermined ID card over a card reader in order to receive primary inspection and secondary inspection. In this case, the estimation devices 10a to 10c can assign the ID information read by the card reader to the person.

Alternatively, the estimation devices 10a to 10c may analyze an image captured by the camera 52 and may assign the ID to the person. The estimation devices 10a to 10c transmit a pair of the estimation result and the ID to the server 246.

The person primarily inspected by any of the estimation devices 10a to 10c is secondarily inspected by any of the detection devices 20a to 20c. In this case, the detection devices 20a to 20c read the ID information of the person by the card reader.

Alternatively, the detection devices 20a to 20c may analyze an image captured by the camera 54. Thun, the detection devices 20a to 20c may detect the ID of the person. The detection devices 20a to 20c transmit the read ID information to the server 246.

The server 246 returns the estimation results corresponding to the IDs transmitted from the detection devices 20a to 20c to the detection devices 20a to 20c, respectively. As a result, the person primarily inspected by any of the estimation devices 10a to 10c can be secondarily inspected by non-used detection devices 20a to 20c. Thus, the two-stage inspection can be efficiently executed.

While certain arrangements have been described, these arrangements have been presented by way of example only, and are not intended to limit the scope of the claims. Indeed, the systems, methods, and storage mediums described herein may be embodied in a variety of other forms; furthermore, various omissions, substitutions, and changes in the form of the systems, methods, and storage mediums described herein may be made.

The arrangements as described above include clauses below.

Clause 1

An inspection system characterized by comprising:

an estimation device 10 configured to estimate an inspection range having a possibility that a predetermined object is present; and
a detection device 20 configured to generate detection information as to whether or not the predetermined object is present in the inspection range.

Clause 2

The inspection system of clause 1, characterized in that the estimation device 10 is configured to transmit range information indicating the inspection range to the detection device 20.

Clause 3

The inspection system of clause 1, characterized by further comprising:

a server 246 connected to the estimation device 10 and the detection device 20,
characterized in that the server 246 is configured to

receive range information indicating the inspection range from the estimation device 10, and
transmit the range information to the detection device 20.

Clause 4

The inspection system of clause 1, characterized in that

the estimation device 10 is configured to estimate a part of a range related to a target person as the inspection range, and
the part of the range has a possibility that the target person possesses the predetermined object.

Clause 5

The inspection system of clause 1, characterized in that the estimation device 10 comprises:

a radar 32, 34 configured to receive a reflected wave from a target person; and
a processor 62 configured to estimate a part of a range related to the target person based on a reflected wave as the inspection range having a possibility that the target person possesses a predetermined object.

Clause 6

The inspection system of clause 5,
characterized in that the radar 32, 34 comprises:

a first radar configured to obtain a reflected wave from a first range included in the range related to the target person; and
a second radar configured to obtain a reflected wave from a second range included in the range related to the target person, or
characterized in that the radar 32, 34 is configured to change a directivity, and is configured to obtain the reflected waves from the first range and the second range.

Clause 7

The inspection system of clause 1, characterized in that the detection device 20 comprises a synthetic aperture radar.

Clause 8

The inspection system of clause 7, characterized in that the synthetic aperture radar is configured to generate an image related to the inspection range.

Clause 9

The inspection system of clause 7, characterized in that

the synthetic aperture radar comprises:

transmitting antennas Tx; and
receiving antennas Rx; and

the synthetic aperture radar is configured to

transmit an electromagnetic wave by using at least one of the transmitting antennas among the plurality of transmitting antennas and corresponding to the inspection range, and
receive an electromagnetic wave by using at least one of the receiving antennas among the plurality of receiving antennas and corresponding to the inspection range.

Clause 10

The inspection system of clause 7, characterized in that

the synthetic aperture radar comprises:

transmitting antennas Tx; and
receiving antennas Rx;

the synthetic aperture radar is configured to change a position of a transmitting antennas that transmits an electromagnetic wave and a position of a receiving antenna that receives an electromagnetic wave in accordance with the inspection range.

Clause 11

The inspection system of clause 1, characterized by further comprising a machine learning unit 242 configured to

receive first information regarding the predetermined object from the detection device 20, and
determine whether or not the predetermined object is present in the inspection range.

Clause 12

The inspection system of clause 11, characterized in that the machine learning unit 242 is configured to

receive second information regarding the inspection range from the estimation device, and
determine whether or not the predetermined object is present in the inspection range based on the first information and the second information.

Clause 13

The inspection system of clause 12, characterized in that the estimation device 10 is configured to

estimate a material of the predetermined object,
transmit third information indicating the material to the machine learning unit, and
determine whether or not the predetermined object is present in the inspection range based on the first information, the second information, and the third information.

Clause 14

An inspection method characterized by comprising:

estimating an inspection range having a possibility that a predetermined object is present; and
detecting whether or not the predetermined object is present in the inspection range.

Clause 15

A non-transitory computer-readable storage medium storing a computer program that, when executed, causes a computer to

estimate an inspection range having a possibility that a predetermined object is present; and
detect whether or not the predetermined object is present in the inspection range.

**Claims**

1. An inspection system **characterized by** comprising:

   an estimation device (10) configured to estimate an inspection range having a possibility that a predetermined object is present; and
   a detection device (20) configured to generate detection information as to whether or not the predetermined object is present in the inspection range.

2. The inspection system of claim 1,
   **characterized in that** the estimation device (10) is configured to transmit range information indicating the inspection range to the detection device (20).

3. The inspection system of claim 1,
   **characterized by** further comprising:

   a server (246) connected to the estimation device (10) and the detection device (20),
   **characterized in that** the server (246) is configured to

   receive range information indicating the inspection range from the estimation device (10), and
   transmit the range information to the detection device (20).

4. The inspection system of claim 1,
   **characterized in that**

   the estimation device (10) is configured to estimate a part of a range related to a target person as the inspection range, and
   the part of the range has a possibility that the target person possesses the predetermined object.

5. The inspection system of claim 1,
   **characterized in that** the estimation device (10) comprises:

a radar (32, 34) configured to receive a reflected wave from a target person; and
a processor (62) configured to estimate a part of a range related to the target person based on a reflected wave as the inspection range having a possibility that the target person possesses a predetermined object.

6. The inspection system of claim 5,
**characterized in that** the radar (32, 34) comprises:

a first radar configured to obtain a reflected wave from a first range included in the range related to the target person; and
a second radar configured to obtain a reflected wave from a second range included in the range related to the target person, or
**characterized in that** the radar (32, 34) is configured to change a directivity, and is configured to obtain the reflected waves from the first range and the second range.

7. The inspection system of claim 1,
**characterized in that** the detection device (20) comprises a synthetic aperture radar.

8. The inspection system of claim 7,
**characterized in that** the synthetic aperture radar is configured to generate an image related to the inspection range.

9. The inspection system of claim 7,
**characterized in that**

the synthetic aperture radar comprises:

transmitting antennas (Tx); and
receiving antennas (Rx); and

the synthetic aperture radar is configured to

transmit an electromagnetic wave by using at least one of the transmitting antennas among the plurality of transmitting antennas and corresponding to the inspection range, and
receive an electromagnetic wave by using at least one of the receiving antennas among the plurality of receiving antennas and corresponding to the inspection range.

10. The inspection system of claim 7,
**characterized in that**

the synthetic aperture radar comprises:

transmitting antennas (Tx); and
receiving antennas (Rx);

the synthetic aperture radar is configured to change a position of a transmitting antennas that transmits an electromagnetic wave and a position of a receiving antenna that receives an electromagnetic wave in accordance with the inspection range.

11. The inspection system of claim 1,
**characterized by** further comprising a machine learning unit (242) configured to

receive first information regarding the predetermined object from the detection device (20), and
determine whether or not the predetermined object is present in the inspection range.

12. The inspection system of claim 11,
**characterized in that** the machine learning unit (242) is configured to

receive second information regarding the inspection range from the estimation device, and
determine whether or not the predetermined object is present in the inspection range based on the first information

17

and the second information.

13. The inspection system of claim 12, **characterized in that**
the estimation device (10) is configured to

estimate a material of the predetermined object,
transmit third information indicating the material to the machine learning unit, and
determine whether or not the predetermined object is present in the inspection range based on the first information, the second information, and the third information.

14. An inspection method **characterized by** comprising:

estimating an inspection range having a possibility that a predetermined object is present; and
detecting whether or not the predetermined object is present in the inspection range.

15. A non-transitory computer-readable storage medium storing a computer program that, when executed, causes a computer to

estimate an inspection range having a possibility that a predetermined object is present; and
detect whether or not the predetermined object is present in the inspection range.

10

20

| Estimation device | Estimation result → | Detection device |

F I G. 1

FIG.2

EP 4 339 635 A1

10

20

```
┌──────────────────────────────────────┐        ┌──────────────────────────────┐
│ Estimation device                    │        │ Detection device             │
│                                       │        │                              │
│      32                    36         │        │            42                │
│  ┌──────────┐        ┌──────────┐    │ Estima-│      ┌──────────┐            │
│  │  First   │───────▶│Estimation│────│─tion   │─────▶│  Range   │            │
│  │inspection│   ┌───▶│   unit   │    │result  │      │ setting  │            │
│  │   unit   │   │    └──────────┘    │        │      │   unit   │            │
│  └──────────┘   │                    │        │      └──────────┘            │
│                 │                    │        │            │                 │
│      34         │                    │        │            ▼  44             │
│  ┌──────────┐   │                    │        │      ┌──────────┐            │
│  │  Second  │───┘                    │        │      │Detection │            │
│  │inspection│                        │        │      │   unit   │            │
│  │   unit   │                        │        │      └──────────┘            │
│  └──────────┘                        │        │            │                 │
│                                       │        │            ▼  46             │
└──────────────────────────────────────┘        │      ┌──────────┐            │
                                                 │      │ Display  │            │
                                                 │      │  device  │            │
                                                 │      └──────────┘            │
                                                 │                              │
                                                 └──────────────────────────────┘
```

# F I G. 3

F I G. 4

F I G. 5

F I G. 6

F I G. 7A

F I G. 7B

Transmission signal

Reception signals

Frequency

Time

## F I G. 8A

Frequency

IF signals

Time

## F I G. 8B

FFT

Reflection intensity

Frequency (distance from radar)

## F I G. 8C

F I G. 9A

F I G. 9B

F I G. 9C

F I G. 10

F I G. 11A

F I G. 11B

F I G. 12

44

Detection unit

142

Transmission
circuit

204

From range
setting unit 42 →  Antenna
selection unit

206

From range
setting unit 42 →  Antenna
selection unit

144

Reception
circuit

To image generation unit 146

140

Tx

Rx

Z
↑
→X

F I G. 13

F I G. 14

F I G. 15A

F I G. 15B

F I G. 16

F I G. 17

```
                    ┌──────────────┐
                    │    Start     │
                    └──────────────┘
                           │
                           │◄──────────────────────┐
                           ▼         S102           │
                      ╱─────────────╲               │
                     ╱     Does      ╲              │
                    ╱ person enter primary ╲  NO    │
                    ╲  inspection range?    ╱────────┘
                     ╲                     ╱
                      ╲─────────────╱
                           │ YES
                           ▼
                 ┌─────────────────────┐
                 │  First inspection unit 32  │──── S104
                 │  inspects left side of person │
                 └─────────────────────┘
                           │
                           ▼
                 ┌─────────────────────┐
                 │ Second inspection unit 34 │──── S106
                 │ inspects right side of person │
                 └─────────────────────┘
                           │
                           ▼
          ┌──────────────────────────────┐
          │ Estimation unit 36 estimates secondary │
          │ inspection range in which predetermined │──── S110
          │  object is present based on inspection  │
          │    results of first, second inspection  │
          │              units 32, 34               │
          └──────────────────────────────┘
                           │
                           ▼
          ┌──────────────────────────────┐
          │  Estimation unit 36 transmits range  │
          │  information indicating secondary    │──── S112
          │ inspection range to detection device 20 │
          └──────────────────────────────┘
                           │
                           │◄──────────────────────┐
                           ▼         S114           │
                      ╱─────────────╲               │
                     ╱     Does      ╲              │
                    ╱ person enter secondary ╲ NO   │
                    ╲   inspection range?     ╱──────┘
                     ╲                       ╱
                      ╲─────────────╱
                           │ YES
                           ▼
                 ┌─────────────────────┐
                 │ Detection device 20 inspects │──── S116
                 │   secondary inspection range, │
                 │ and detects predetermined object │
                 └─────────────────────┘
                           │
                           ▼
                    ┌──────────────┐
                    │     End      │
                    └──────────────┘
```

F I G. 18

F I G. 19

F I G. 20

Europäisches
Patentamt

European
Patent Office

Office européen
des brevets

# EUROPEAN SEARCH REPORT

Application Number

EP 23 16 0157

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2020/393594 A1 (OBATA HARUKA [JP] ET AL) 17 December 2020 (2020-12-17) * paragraphs [0036], [0041], [0045], [0046], [0052], [0054], [0069], [0070], [0072], [0073], [0077], [0095], [0106], [0120], [0133]; figures 1b, 7A-C, 9, 10A, 10B, 12, 13, 14A, 14B, 15, 17 * | 1-15 | INV. G01S7/41 G01S13/86 G01S13/87 G01S13/88 G01S13/90 |
| X | WO 2021/216707 A1 (UNIV PRINCETON [US]) 28 October 2021 (2021-10-28) * paragraphs [0008], [0026], [0094], [0106]; claim 2; figures 1,8 * | 1-4,7-10 | |
| X | US 2014/168013 A1 (WANG QI [DE] ET AL) 19 June 2014 (2014-06-19) * paragraphs [0029], [0031], [0043]; claims 2,10; figures 1,8 * | 1,2,5 | |
| A | US 2022/214447 A1 (GRAHAM HATCH [US] ET AL) 7 July 2022 (2022-07-07) * paragraph [0008] * | 7 | |

TECHNICAL FIELDS
SEARCHED (IPC)

G01S

The present search report has been drawn up for all claims

| Place of search | Date of completion of the search | Examiner |
|---|---|---|
| Munich | 9 August 2023 | Auinger, Florian |

CATEGORY OF CITED DOCUMENTS

X : particularly relevant if taken alone
Y : particularly relevant if combined with another
  document of the same category
A : technological background
O : non-written disclosure
P : intermediate document

T : theory or principle underlying the invention
E : earlier patent document, but published on, or
  after the filing date
D : document cited in the application
L : document cited for other reasons

................................................................

& : member of the same patent family, corresponding
  document

EPO FORM 1503 03.82 (P04C01)

## ANNEX TO THE EUROPEAN SEARCH REPORT
## ON EUROPEAN PATENT APPLICATION NO.

EP 23 16 0157

This annex lists the patent family members relating to the patent documents cited in the above-mentioned European search report.
The members are as contained in the European Patent Office EDP file on
The European Patent Office is in no way liable for these particulars which are merely given for the purpose of information.

09-08-2023

| Patent document cited in search report | | | Publication date | Patent family member(s) | | | Publication date |
|---|---|---|---|---|---|---|---|
| US 2020393594 | A1 | | 17-12-2020 | JP | 2020204513 | A | 24-12-2020 |
| | | | | US | 2020393594 | A1 | 17-12-2020 |
| | | | | US | 2022244420 | A1 | 04-08-2022 |
| WO 2021216707 | A1 | | 28-10-2021 | US | 2023194702 | A1 | 22-06-2023 |
| | | | | WO | 2021216707 | A1 | 28-10-2021 |
| US 2014168013 | A1 | | 19-06-2014 | CN | 103885088 | A | 25-06-2014 |
| | | | | DE | 102013016813 | A1 | 26-06-2014 |
| | | | | US | 2014168013 | A1 | 19-06-2014 |
| US 2022214447 | A1 | | 07-07-2022 | US | 2022214447 | A1 | 07-07-2022 |
| | | | | WO | 2022150268 | A1 | 14-07-2022 |

EPO FORM P0459

For more details about this annex : see Official Journal of the European Patent Office, No. 12/82